# EUROPEAN PATENT SPECIFICATION

(11) **EP 0 873 185 B1**
(45) Date of publication and mention of the grant of the patent: **21.05.2003**
(21) Application number: 96918199.9
(22) Date of filing: 06.06.1996
(51) Int. Cl.: B01J 19/26, B01J 14/00, B01J 10/00, B01J 2/04, C08F 20/06

(54) **A POLYMERIZATION PROCESS AND APPARATUS**
POLYMERISATIONSVERFAHREN UND -VORRICHTUNG
PROCEDE ET APPAREIL DE POLYMERISATION

(30) Priority: 07.06.1995 US 479167; 07.06.1995 US 483800; 07.06.1995 US 486079
(43) Date of publication of application: 28.10.1998
(73) Proprietor: Freeman, Clarence S., Channelview, TX 77530 (US); Freeman, Matthew Max, Channelview, TX 77530 (US); Freeman, Jon Joseph, Channelview, TX 77530 (US)
(72) Inventor: Freeman, Clarence S., Channelview, TX 77530 (US); Freeman, Matthew Max, Channelview, TX 77530 (US); Freeman, Jon Joseph, Channelview, TX 77530 (US)
(74) Representative: Frankland, Nigel Howard
(86) International application number: US9609132
(87) International publication number: WO96040427

(56) References cited:
- EP-A- 0 173 518
- EP-A- 0 380 275
- EP-A- 0 522 776
- GB-A- 748 647
- US-A- 3 325 455
- US-A- 5 269 980
- PATENT ABSTRACTS OF JAPAN vol. 14, no. 30 (C-678), 19 January 1990 & JP,A,01 268701 (ASAHI CHEM. IND. CO. LTD.), 26 October 1989, & DATABASE WPI Section Ch, Week 8949 Derwent Publications Ltd., London, GB; Class A09, AN 89-359910 & JP,A,01 268 701 (ASAHI CHEMICAL IND. K.K.) , 26 October 1989

## Description

THE PRESENT INVENTION relates to a spray polymerization process, and an apparatus for producing a dry polymer. Particularly, the present invention relates to a polymerization process for the continuous production in a controlled atmosphere of a substantially dry polymer particle powder comprising polymer particles of desired size, shape and density from a liquid monomer source.

It is known in the art that polymers may be synthesised by step plyinerization and chain polymerization processes. Examples of the types of monomers which will polymerize to high molecular weight polymers in the presence of a radical initiator include: ethylene; 1,3-dienes; styrene; halogenated olefins; vinyl esters; acrylates; methacrylates; acrylonitrile; inethacrylonitrile; acrylamide; methacrylamide; N-vinyl carbazole; N-vinyl pyrrolidone.

Essentially, radical polymerization conditions are either homogenous or heterogeneous, depending upon whether the initial reaction mixture is homogenous or heterogeneous. Generally, mass and solution polymerizations are homogeneous processes, while suspension and emulsion polymerizations are heterogeneous processes.

Bulk or mass polymerization of a pure monomer offers the simplest process with a minimum of contamination of the product. Bulk polymerization, however, is difficult to control due to the characteristics of radical chain polymerization. The bulk process is highly exothermic, high activation energies are involved, and there is a tendency toward the gel effect. Such characteristics make the dissipation of heat difficult, therefor, careful temperature control is required during bulk polymerization processes. Additionally, the viscosity of the reaction system increases rapidly at a relatively low conversion, thereby requiring the use of elaborate stirring equipment. There is also the risk in extreme cases that an uncontrolled acceleration of the polymerization rate can lead to disastrous runaway-type reactions.

Many of the disadvantages of bulk polymerization may be overcome by polymerizing a monomer in a solvent (solution polymerization). The solvent, which may be water, acts as a diluent and aids in the transfer of the heat of polymerization. The solvent can be easily stirred since the viscosity of the reaction mixture is decreased. Although thermal control of a solution polymerization process is easier than with mass or bulk polymerization, the purity of the polymer may be affected if there are difficulties in removing the solvent during and following polymerization.

Heterogeneous polymerization is used extensively to control the thermal viscosity problems often associated with homogeneous processes. Precipitation polymerization is a heterogeneous polymerization process which begins as a homogeneous polymerization but converts to heterogeneous polymerization. A monomer either in bulk or in solution forms an insoluble polymer in the reaction medium. Precipitation polymerization can be referred to as powder or granular polymerizations because of the forms in which the final polymer products are obtained.

Suspension polymerization, also referred to as bead or pearl polymerization, is carried out by suspending the monomer as droplets in water. The monomer droplets which are subsequently converted to polymer particles do not coalesce due to agitation and the presence of suspension stabilizers also referred to as dispersants or surfactants.

Suspension polymerization initiators are soluble in the monomer droplets and are referred to as oil-soluble initiators. Suspension polymerization in the presence of high concentrations of water soluble stabilizers are used to produce latex-like dispersions of particles having small particle size. Such suspension polymerizations may be referred to as dispersion polymerizations. Inverse microsuspension polymerization involves an organic solvent as a continuous phase of a water soluble monomer either neat or dissolved in water. Inverse dispersion refers to systems involving the organic solvent as continuous phase with dissolved monomer initiator that yield insoluble polymer.

Emulsion polymerization involves the polymerization of monomers in the form of emulsions, i.e., colloidal dispersions. Emulsion polymerization differs from suspension polymerization in the type and smaller size of the particles in which polymerization occurs, in the kind of initiator employed, and in the dependence of polymer molecular weight on reaction parameters. For most polymerization processes there is an inverse relationship between the polymerization rate and the polymer molecular weight. Large decreases in the molecular weight of a polymer can be made without altering the polymerization rate by using chain transfer agents. Large increases in molecular weight can be made only by decreasing the polymerization rate, by lowering the initiator concentration, or lowering the reaction temperature.

Emulsion polymerization allows for increasing the polymer molecular weight without decreasing the polymerization rate. Emulsion polymerization has the advantage of being able to simultaneously obtain both high molecular weights and high reaction rates. The dispersing medium is usually water in which the various components are dispersed by means of an emulsifier. Other components include the monomer, a dispersing medium surfactant and a water soluble initiator.

The polymerization processes discussed above involve additional steps either to dry the polymer formed, separate the polymer from the organic solvent used in the process, or to recover the organic solvent. The added steps require additional energy and time in preparing the final product, thereby increasing the cost of the polymer produced. Moreover, the polymers produced using these known processes typically are produced as an agglomeration which must, following drying, be pulverized or in some way broken up to yield a usable polymer product. Breaking up the polymer product by grinding or pulverizing produces a substantial amount of dust which raises environmental and health concerns to those having to work in and around the polymer dust.

Therefore, there remains a need for a polymerization process which eliminates the need to dry and pulverize the polymer product produced. There is also a need for a polymerization process for producing polymers which are immediately available for use following the completion of the polymerization process.

Finally, there is a need for a process to produce a polymer which allows the size, shape, and density of the polymer to be controlled easily and precisely. This is particularly important, for example, with polymers used in situations where a smooth surface is beneficial, such as in fiber optic cables. Fiber optic cables, which are becoming more common in telecommunications, are susceptible to invasive water. However, the use of super-absorbing polymers in fiber optic cables is problematical because of the relatively "soft" cladding around each fiber. The "softness" of the cladding makes it prone to scratching, which alters the refractive index of the cladding, and therefore, the ability of the fiber to conduct light. Experimentation has shown that superabsorbers produced by known processes cause very fine scratching of the cladding, an effect which is attributed to the rough surfaces of the polymer particles resulting from the pulverization, grinding, or chopping of the solid cross-linked polymer resulting from the above-described production methods into a fine powder as described above. The scratches in the surface of the cladding occur whenever the fiber optic cable is flexed, e.g., when the cable is wound on a spool and then wound off the spool for installation.

Exemplary of the shortcomings of current polymerization processes are the known methods for the production of water-absorbing polymers. Such methods can be categorized as involving either an aqueous system or a multi-phase process. Aqueous systems for production of such polymers generally result in a semi-solid mass of material from which water must be removed in an energy-intensive drying step.

Examples of such processes are found in the following U.S. patents:

| AQUEOUS | | | |
|---|---|---|---|
| 3,661,815 | 3,669,103 | 4,071,650 | 4,167,464 |
| 4,286,082 | 4,295,987 | 4,342,858 | 4,351,922 |
| 4,389,513 | 4,401,795 | 4,525,527 | 4,552,938 |
| 4,612,250 | 4,618,631 | 4,654,393 | 4,703,067 |

| MULTI-PHASE | | | |
|---|---|---|---|
| 4,059,552 | 4,093,776 | 4,340,706 | 4,446,261 |
| 4,459,396 | 4,666,975 | | |

| AQUEOUS/MULTI-PHASE | | | |
|---|---|---|---|
| 4,062,817 | 4,654,039 | | |

These processes are characterised by a number of disadvantages which add to the cost of producing such polymers such that there is a need for an improved method for producing these and other polymers.

Another disadvantage to producing polymers by known polymerization methods, particularly with respect to water-absorbing polymers, is the difficulty often experienced in controlling the size, shape, and density of the polymers produced. For example, water-absorbing polymer particles with a smooth external surface are, so far as is known by Applicants, are previously unknown. It appears that at least some multi-phase methods for production of such polymers result in spherical (see, for instance, column 5, lines 39, 48 and 60 of the above-incorporated U.S. Patent 4,446,261) or donut-shaped (see column 6, line 57 of the above-incorporated U.S. Patent 4,342,858) particles, but Applicants have been unable to find any such particles which have a smooth surface. Instead, all known particles are characterised by either a rough surface or by a surface such as that described in the above-listed U.S. Patent No. 4,342,858 (column 6, lines 56-58) as being "high surface area donuts of collapsed spherical shapes with 2 to 5 micron protuberances on their surfaces".

Some additional disadvantages are characterised at, for instance, column 2, lines 56 et seg. of U.S. Patent No. 4,093,776 and column 1, lines 18-56 of U.S. Patent No. 4,625,001, both hereby incorporated in their entirety by this separate reference thereto.

It is therefore an object of the present invention to provide a novel process for making a polymer.

According to this invention there is provided a polymerization process for producing water absorbent polymer particles said process including the steps of:
(a) preparing a first mixture of at least one monomer and a solvent selected from the group consisting of water, organic solvents and mixtures thereof;
(b) adding an initiator to the first mixture to form a second mixture;
(c) spraying the second mixture into a heated, substantially static atmosphere having a pressure reduced below ambient pressure within a reaction chamber, said spraying resulting in the formation of droplets of said second mixture; and
(d) allowing said droplets of the sprayed second mixture to fall through the heated, substantially static atmosphere for a period of time sufficient to obtain dry water absorbent polymer particles with a desired degree of polymerization.

Preferably said second mixture is sprayed into the said atmosphere through one or more nozzles, and wherein the size of the polymer particles produced is selected by increasing or decreasing the size of the nozzle opening.

Conveniently said solvent is continuously evacuated from the atmosphere during the polymerization process.

Advantageously said atmosphere is at a temperature of from about 23.8°C to about 148.8°C.

Preferably said heated, substantially static atmosphere is maintained at a pressure of from about 388.6 to about 50,790 N/m² below ambient pressure.

Conveniently said second mixture is sprayed into the heated, substantially static atmosphere at a pressure of between 517 Kpa and about 13.7 Mpa.

Alternatively the pressure within the chamber is increased above ambient pressure to reduce the size of the droplets or produce dense polymer spheres.

Preferably said first mixture is cooled prior to adding the initiator source.

The method may further comprise adding a crosslinker source to the first mixture.

Advantageously the second mixture is maintained at a temperature between about 26.6 degrees C and about 93.3 degrees C. Conveniently the monomer is a water-soluble, unsaturated monomer. Preferably the monomer is selected from the group consisting of functionalized olefins.

Advantageously said monomer is selected from the group consisting of styrenes, propylenes, vinyls, acrylates, methacrylates, acrylonitrile, methacrylonitrile, acrylamide and methacrylamide.

In a preferred embodiment the monomer is acrylic acid.

The polymerization process for producing an acrylic acid containing polymer wherein the first mixture is an aqueous mixture of partially neutralised acrylic acid, the polymer particles being particles of a partially neutralised acrylic acid containing polymer in particle powder form.

Conveniently the dry polymer particles produced comprise an irregularly puffed shaped polymer having relatively low density.

The invention also provides a polymerization apparatus comprising;
a reaction chamber;
means for heating said reaction chamber;
means for providing a reduced pressure within said reaction chamber;
one or more nozzles connected to a feed line for receiving a mixture of a monomer and an initiator;
means for spraying the mixture into the top section of the reaction chamber such that said spraying results in the formation of droplets of said mixture which experience free fall through the reaction chamber for a sufficient period of time to obtain a desired degree of polymerization, and
a means for removing the polymer from the bottom of said reaction chamber while maintaining the heat and the reduced pressure within the chamber.

Polymer particle is defined herein as a substantially dry powder-like product. Substantially dry means that the particles will not agglomerate or stick together, and the powder is free flowing. The present process enables the production of polymer particles from about 20 microns to about 125,000 microns in size. However, polymer size, shape, and density in a powder will be fairly uniform when prepared under similar pressure, temperature, and the other parameters which will be more fully discussed in the Detailed Description of the Invention.

The monomer source maybe an aqueous solution, slurry, or emulsion of a selected monomer. The preferred solvent is water. Similarly, the crosslinker source may be an aqueous solution, slurry, or emulsion of a selected crosslinker and the solvent is water.

Monomer sources which may be polymerized using the process include unfunctionalized olefins and functionalized olefins, including but not limited to acrylic acid, ethylenes, dienes, styrenes, propylenes, vinyls, methacrylates, acrylonitrile, methacrylonitrile, acrylamide, methacrylamide and alkenes.

The preferred apparatus for determining the process comprises a reaction chamber preferably from about 3.65 to about 30.48 meters in height, a means for controlling the pressure within said reaction chamber, one or more nozzles connected to a feed line for receiving a mixture of a monomer source and an initiator source, and a means for spraying the mixture into the top section of the reaction chamber. Spraying the mixture into the chamber results in the formation of droplets which fall through the reaction chamber for a sufficient period of time to obtain a desired degree of polymerization.

An unexpected advantage of producing polymers in accordance with the present invention is the production of a particle having a smooth external surface, making possible certain new uses for such polymers, particularly water-absorbing polymers. Water-absorbing polymers may be used to advantage in telecommunications cables for the purpose of protecting the conductors from shorts caused by invasive water.

### BRIEF DESCRIPTION OF THE DRAWINGS

FIGURE 1 is a schematic representation of an apparatus constructed in accordance with the present invention,
FIGURE 2 is a sectional view, taken along the lines 2-2 in Figure 1, of the apparatus of Figure 1.

### DETAILED DESCRIPTION OF THE INVENTION

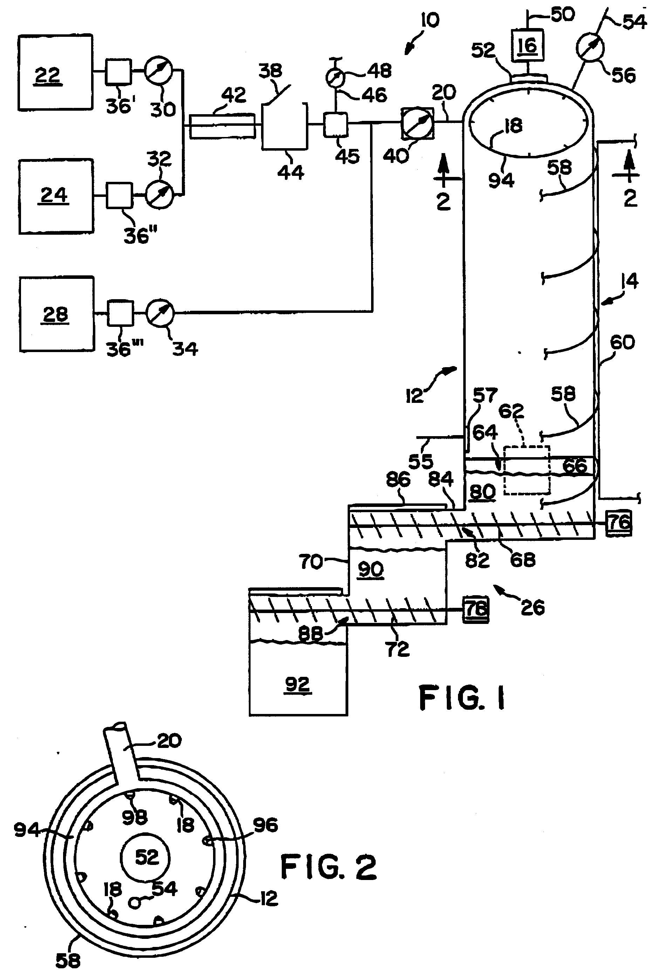

Referring first to Figure 1, there is shown an apparatus designated generally at reference numeral 10. Briefly, the apparatus 10 is comprised of a reaction chamber or other closed vessel 12, means for heating the reaction chamber 12, shown schematically at reference numeral 14, means for reducing the pressure in reaction chamber 12 in the forin of the vacuum pump 16, nozzle 18 connected to a feed line 20 for receiving a mixture of a monomer and an initiator from the respective sources 22 and 28 thereof, and means, in the form of the bins and auger system indicated generally at reference numeral 26, for removing the dry polymer paiticle powder produced in reaction chamber 12 from the bottom thereof while maintaining reduced pressure in the reaction chamber 12. Reaction chamber 12 will preferably be about 3.65 to about 30.48 meters in height.

In more detail, the apparatus 10 includes sources, or reservoirs, of monomers 22, initiator 28, and a third reservoir 24 preferably comprising a source of a crosslinker. A crosslinker or combination of crosslinkers will be added to the monomer and initiator mixture when it is desirable to produce crosslinked polymer structure, such as water-absorbing acrylic family polymers. Other reservoirs (not shown), each preferably individually temperature controlled, are provided for other monomers (for co-polymerization processes), water, neutralizer, stabiliszer, transfer agent, solvent, or other reagents.

Each of the reservoirs 22, 24 and 28 may contain an aqueous and/or organic solvent-based solution, suspension, or emulsion of the respective reagent and therefor is preferably provided with valves 30, 32 and 34, respectively, for controlling the flow of the respective reagents therefrom under the influence of the pumps 36. Alternatively, feed line 20 is pressure fed from the respective reservoirs 22, 24 and 28. Feed line 20 is provided with means, indicated generally at reference numeral 44, for mixing the aqueous and/or organic solvent-based mixture of reagents to insure uniform distribution between monomer, initiator, and other reagents of the polymerization mixture. Mixing means 44 takes a number of forms known in the art such as an in-line screw or auger, mill, vat with stirring blades, or baffle system. Also provided is a hatch 38 in the housing of mixing means for adding any other types of reagents.

Because the polymerization of the monomer begins almost instantaneously upon the mixing of the initiator and monomer and proceeds rapidly in an exotherinic reaction, the temperature of the mixture in feed line 20 is used to control the degree of polymerization of the monomer and, when crosslinkers are added, the degree of crosslinking of the polymer structure (note that Figure I is not drawn to scale). To that end, a means is provided for controlling the temperature of the mixture in feed line 20 which is shown schematically at reference numeral 42. Temperature control means 42 may take the form of a water bath, refrigeration coils, insulation, a combination of heating element and refrigeration coils, or any other means known for controlling temperature, depending upon the nature of the monomer(s) being polymerized and/or crosslinked. Means 42 is used primarily to reduce the heat resulting from the exothermic polymerization reaction. Lowering the temperature of the reagent mixture in line 20 prevents the polymerization rate of the monomer source.

In a preferred embodiment, line 20 is provided with a nitrogen pure chamber 45 fed by a line 46 having a valve 48 therein for a flow of nitrogen to purge the mixture of reagents flowing therethrough. A metered pump 40 in feed line 20 provides control over the pressure and rate of flow of the mixture of reagents.

The pressure of the atmosphere in reaction chamber 12 is controlled during the polymerization reaction. The pressure of the atmosphere in reaction chamber 12 may be reduced relative to the ambient pressure by vacuum pump 16, the atmosphere therein being removed from reaction chamber 12 through line 50. A filter 52 is provided at the intake of line 50 to prevent droplets/particles of polymerized monomer from being pulled into vacuum pump 16. Filter 52 is preferably set in a frame accessible from the exterior of reaction chamber 12 to facilitate periodic changing of the filter element (not shown).

An air intake or vent line 54 having a flow control valve 56 therein is provided at the top of reaction chamber 12 for allowing ambient air into reaction chamber 12 to purge line 50 and pump 16 and/or in the event of an emergency shutdown. Instead of using air intake line 54 as a vent, nitrogen can also be introduced into the atmosphere in reaction chamber 12 through line 54 to purge the atmosphere therein, in which cases, a purge line 55 is provided for recapturing the nitrogen. Again, a filter 57 prevents polymer particles from being pulled into line 55. Reaction chamber 12 is also provided with mean 62, in the form of a clean-out hatch, for removing unpolymerized monomer, or, in the event of a malfunction of particle removing means 26, the dry polymerized particles, from the bottom thereof. Heater 14 may be multiple resistive heating elements, gas burners, or steam lines, indicated schematically at reference numeral 58, powered from a common line 60 from a source of electricity, steam, or gas (not shown).

Means 26 is provided for removing the polymer from the bottom of reaction chamber 12 while maintaining the heat and atmosphere therein. Means 26 may be any of the devices known to those skilled in the art.

The accumulated dry polymer pauticles 80 in the bottom of to tower 12 cover the portal 82 out of the bottom reaction chamber 12 to maintain the reduced pressure therein as first auger 68 moves the accumulated polymer particles 80 into bin 70. A shroud 84 covers first auger between reaction chamber 12 and bin 70 to prevent the influx of ambient air into reaction chamber 12 and bin 70 is closed by a lid 86 at the top thereof. A portal 88 in the bottom of bin 70 allows the accumulated polymer particles in bin 70 to be moved out of bin 70 into hopper 74. In the same manner that the accumulated polymer particles 80 cover the portal 82 in the bottom of reaction chamber 12, accumulated polymer particles 90 cover the portal 88 in the bottom of bin 70 to prevent an influx of ambient air therethrough.

The conditions under which polymerization and crosslinking occur are such that the particles of polymer 80 which accumulate at the bottom of reaction chamber 12 are substantially dry and have a low moisture content, and preventing access to the accumulated polymer 80 by relatively humid ambient air is necessary to prevent the caking of the dry, accumulated polymer 80 as it is moved out of reaction chamber 12. Other means can be utilized to remove the dry accumulated polymer 80 from the bottom of reaction chamber 12 without breaking the vacuum therein. For instance, gravity feed, intermittent dump, and suction devices are all used to advantage for this purpose.

As shown in Fig. 2, feed line 20 enters reaction chamber 12 and terminates in a loop 94 having a plurality of nozzles 18 set therein. Alternatively, a single nozzle may be used. Nozzles 18 are preferably screwed into the threads 96 formed at intervals around the loop 94 for ease in removing nozzles 18 for cleaning and/or changing. In another preferred embodiment (not shown), the loop 94 in feed line 20 is positioned outside of the top of tower 12. The latter embodiment is particularly advantageous for frequent changing of nozzles 18 to, for instance, change the diameter of the polymeric spheres.

If larger diameter particles are desired, the mixture in line 20 is sprayed into reaction chamber 12 at relatively low pressure, e.g., about 517 KPa to about 2.06 MPa through nozzles 18 having a larger diameter orifice, for instance, a number 16 nozzle. If it is desired to produce a smaller diameter sphere, the pressure in line 20 is increased with pump 40, e.g., from about 1.03 MPa on up to as high as perhaps 13.7 MPa, causing the mixture to be atomized into finer sized particles. If even smaller particles are desired, or if it is desired to produce smaller diameter particles at lower spray pressures, nozzles 18 are replaced with nozzles having smaller orifices, e.g., a number 64 nozzle.

The method of continuously producing a polymer comprises the mixing of the monomer source in water or organic solvent in mixer 44 to prepare a liquid monomer source. It is preferred that the monomer be an aqueous monomer source. An initiator, crosslinker, additional water, neutralizer and/or other reagents may be added to the monomer source in mixer 44. In the preferred embodiment of the process, the monomer, initiator, and other reagents used will be soluble in water or the organic solvent used to prepare the liquid monomer source. It is preferred, however, that the monomer, initiator and other reagents are soluble in water.

It is preferred that the initiator is added downstream from the monomer source immediately prior to the mixture being sprayed into the reaction chamber 12 to reduce the likelihood that line 20 or nozzles 18 will become clogged by prepolymerization of the monomers.

The rate and extent of polymerization is facilitated by the use of an initiator.

Note that it may be advantageous to agitate or otherwise insure adequate mixing of initiator and aqueous mixture by use of a second mixing means (not shown) similar to mixing means 44 downstream of the point at which the initiator is added to line 20.

Reaction chamber 12 is heated by heater 14 and the pressure of the atmosphere is controlled according to the monomer source being polymerized. Desired pressures at which to cause polymerization of selected monomers will be known to those skilled in the art. The atmosphere is maintained at a reduced pressure by vacuum pump 16. The atmosphere may be controlled at a desired pressure by use of a pressure release valve in conjunction with the pressure evacuation pump.

The mixture of monomers and/or reagents is sprayed into the heated, controlled atmosphere, thereby forming droplets of the mixture. The droplets are allowed to fall through the reaction chamber for a period of time sufficient to allow the desired degree of polymerization of the monomers, and where a crosslinker has been added, crosslinking of the polymerized monomer, to form particles of polymer. The polymer particles formed may be linear, branched or crosslinked polymers, depending upon the composition of the sprayed mixture.

As the droplet of the mixture of monomers and/or reagents fall from the spray nozzle through the chamber, water and/or solvents associated with the polymerization mixture are continually evaporated or volatilized as the polymerization reaction occurs. In the presence of the preferred reduced pressure within chamber 12, water and/or solvent associated with the mixture is continually evaporated or volatilized due to both the presence of heat and the reduced pressure. Vapours are evacuated by vacuum pump 16 during the polymerization action.

The polymer particles produced as a result of the polymerization process are in the form of a substantially dry powder 80. The polymers produced in dry particle form by this process may have a particle size from as small as approximately 2 microns up to as large as about 125,000 microns (approximately 1/8 inch). The size of the polymer will depend upon the pressure, temperatures, and other parameters discussed more fully below which are present and/or utilized during the polymerization process. The polymer size, shape, and density, however, will be relatively uniform when produced under similar conditions. The fallen particles of polymer 80 which collect at the bottom of reaction chamber 12 are removed while continuing to control the pressure within the chamber. The atmosphere will be maintained at the pressure desired for the selected polymerization desired as the polymer is removed.

It is preferred that the atmosphere in reaction chamber 12 be heated to a temperature of between about 23.8°C and about 148.8°C. Temperatures of between about 82.2°C and about 110°C have been found to be particularly preferred. Although it is possible to make polymers at temperatures below 37.8°C, a larger reduction of the pressure within reaction chamber 12 must be present if low water or solvent content and low residual monomer levels are to be maintained.

The polymerization reaction and, when crosslinker is added to the mixture, crosslinking which occurs as the droplets fall through reaction chamber 12 is exothermic such that relatively little external heat is needed from heater 14 once a desired temperature is reached and the continuous polymerization/crosslinking is underway. Hence, temperatures of well above, for instance, 37.8°C can be maintained without compromising the efficiency of the method. Further adding to the efficiency of the method of the present invention is the heat retention of the accumulated mass of particles 80 at the bottom of reaction chamber 12

It has been found that even relatively minor reductions in the piessure inside the reaction chamber below nominal ambient pressure of about 101,580 N/m² cause disproportionate decreases in the water content of the polymers produced and the amount of unpolymerrzed residual monomer which does not participate in the polymerization and/or cross-linking reaction. For this reason the polymerization process is conducted under reduced pressure conditions in the chamber.

Reductions in pressure of from about 338.6 up to about 50,790 N/m² is preferred for use in connection with the method of the present invention. For a given particle size, the water and/or residual monomer content is directly correlated between the temperature of the atmosphere within reaction chamber 12 and the pressure at which the atmosphere within reaction chamber 12 is maintained. As a general rule, as temperatuie is increased, the percentage of residual monomer and/or water or solvent content can be maintained at low levels with progressively smaller reductions in pressure relative to ambient pressure Likewise, as the pressure of the atmosphere in reaction chamber 12 is decreased relative to ambient, low percentages of residual monomer and/or water or solvent content can be maintained with progressively lower temperatures

The shape of the polymer is also influenced by the below ambient pressure in the chamber. Varying the pressure allows production of from spherical to more irregular-shaped polymers. It lower below ambient pressures, the polymers will be less uniform in shape and have rougher edges or flake-like appearances. As the reduced pressure approaches ambient, the polymers become more spherical than is observed with polymers produced, for example, at 500.7 kN/m (15 inches of Hg) below atmospheric ambient pressure. Increasing the pressure within the chamber enables the production of a smoother, more dense polymer sphere than thosse produced in low atmospheric pressure conditions.

The period of time required during which the droplets fall through the atmosphere within reaction chamber 12, determine the height of the reaction chamber. As a general rule, fall times of between about 5 and about 60 seconds are required under the preferred conditions of temperature and controlled pressure to achieve the desired degree of polymerization, crosslinking, and evacuation of water/solvent and residual monomer for most monomer/crosslinker mixtures. Experimentation has shown that reaction chamber height must be adequate to allow sufficient reaction chamber fall times in order to achieve the desired extent of polymerization.

The period of time the droplet is allowed to fall through reaction chamber 12 (and hence, the height of that chamber) is also related in part to the diameter of the droplet sprayed from nozzle 18. A nozzle 18 having a large orifice 98 therein produces a larger diameter droplet such that either the reaction chamber fall time of the droplet may be increased, the reduction in the pressure of the atmosphere in reaction chamber 12 may be increased, the temperature may be increased, or some combination of changes in these three parameters may be effected, in order to obtain the desired degree of polymerization, and water/solvent evaporation throughout the resulting particle. In the case of very large diameter droplets, pressure reductions of greater than 67,720 N/m², temperatures of over 101.7°C, and reaction chamber fall times in the 20 second or higher range may be required to allow the desired degree of polymerization and evaporation of liquid.

Another variable affecting the production of polymers is the pressure at which the mixture of monomer and initiator and/or crosslinker is sprayed into the heated, controlled atmosphere in reaction chamber 12. In general, as the pressure at which the mixture is sprayed increases, the size of the droplet decreases, requiring concomitant changes in either reaction chamber fall time, temperature, reduction in pressure in reaction chamber 12, the diameter of the orifice 98 in nozzle 18, or some combination thereof. Satisfactory results have been obtained at spray pressures of between about 517 KPa and about 13.7 MPa, and more preferably pressures of between about 698.3 KPa and about 1.20 MPa. The pressure in the line at which the mixture is sprayed, as well as the reduced temperature, prevent the polymerization of monomers prior to their being sprayed into the chamber. Therefore, the combination of decreasing temperature in the feed line, increasing pressure in the feed line and introducing the initiator immediately prior to spraying the mixture into the chamber essentially eliminates any prepolymerization of monomer in the feed line.

A final variable affecting the present invention is the nature of the monomer, initiator, crosslinker and other reagents desired to be polymerized. By reference herein to a monomer, it is intended to refer to any organic molecule which is capable of being polymerized by covalent bonding to other organic molecules and/or itself to form chains. The following listing will provide an example of certain monomers, including functionalized and/or unfunctionalized olefins, which may be polymerized and in most cases crosslinked in accordance with the method of the present invention:
(a) water-soluble, ethylenically unsaturated monomers, acrylic acid, methacrylic acid, salts of acrylic acid and methacrylic acid, acrylamide, methacrylamide, N-substituted acrylamides, N-substituted methacrylamide, 2-acryloylethane-sulfonic acid, 2-methacryloylethane sulfonic acid, salts of 2-acryloylethane-sulfonic acid and 2-methacryloylethane-sulfonic acid, styrene-sulfonic acid, salts of styrene-sulfonic acid, 2-hydroxyethyl acrylate and 2-hydroxyethylmethacrylate;
(b) the monomers described in Markus, U.S. Patent No. 2,810,716: acrolein, allylidenediacetate, acrylonitrile, esters of acrylic and methacrylic acid (including methyl methacrylate, ethyl methacrylate, fumaric acid, monomethylfumarate, dimethylfumarate, monoethylfumarte, diethylfumarte, maleic anhydride, maleic acid, monomethylmaleate, dimethylmaleate, monoethylmaleate, diethylmaleate, dimethylmethylenemalonate, diethylmethylene malonate, itaconic acid, monomethylitaconate, dimethyl itaconate, monoethyl itaconate, diethylitaconate, atrophic acid, methyl atropate, and ethyl atropate), chloracrylic acid and esters thereof, bromoacrylic acid and esters thereof, iodoacrylic acid and esters thereof, ortho-, meta-, and paramethylstyrene, fluorostyrene and chlorostyrene, a-sulfoacrylic acid, salts and esters, a-amino-acrylic acid, salts and esters, n-monomethyl and N,N'-dimethyl acrylamide, acrylic and methacrylic anhydride, methylvinylketone, hydroxymethylvinylketone, ortho- and paramethoxystyrene, ethyleneglycol monomaleate, ethylglycol monofumarate, N-vinylmethylacetamide, vinyl acetate, vinyl butyrate, vinyl benzoate, vinylquinoline, and vinylpyridines such as 2- vinylpyridine, 4-vinylpyridine, 2-methyl-5-vinylpyridine, 2-vinyl-5-ethylpyridine, N-vinylpyrrolidone, cyclopentadiene, N-vinylphthalimide, N-vinylsuccinimide, N-vinylacetamide and N-vinyl-diacetamide;
(c) the monomers described in Glavis, et al., U.S. Patent No. 2,956,046: salts of unsaturated monomeric acids such as quaternary ammonium salts and amine salts thereof and salts of ammonia, alkali metals and alkaline earth metals, including B-hydroxyethyltrimethylammonium acrylate, benzyltrimethyl ammonium acrylate, amine salts, monomethylammonium acrylate, and di- and trimethylammonium acrylate;
(d) the monomers described in Wichterle, et al., U.S. Patent No. 3,220,960: dimethylaminoethyl methacrylate, piperidinoethyl methacrylate, morpholinoethyl methacrylate, methacrylylglycolic acid, methacrylic acid, monomethacrylates of glycol, glycerol and ployhydric alcohols, dialkylene glycols and polyalkylene glycols and the corresponding acrylates;
(e) the monomers described in Bashaw, et al., U.S. Patent No. 3,229,769: cross-linked, substantially water-insoluble, water-swellable sulfonated alkaryl and aromatic polymers such as cross-linked polysodium styrene sulfonate and sulfonated polyvinyltoluene salts, copolymers of such sulfonated alkaryl and aromatic materials with acrylonitriles, alkyl acrylonitriles, acrylates and methacrylates, cross-linked polyvinyl alcohol and polyacrylamide and crosslinked copolymers of polyacrylamide, e.g., of acrylamide and acrylic acid or acrylamide and monovalent salts of acrylic acid, and cross-linked heterocyclic monomers such as polyvinyl morpholinone, poly-5-methyl-N-vinyl-2-oxazolidinone, and polyvinyl pyrrolidene;
(f) the monomers described in Assarsson, U.S. Patent No. 3,664,343: water-insoluble hydrophilic poly (ethylene oxide) polymers made by subjecting water-soluble poly (ethylene oxide) polymers to ionizing radiation (such polymers are homopolymers of ethylene oxide and copolymers of ethylene oxide with one or more alkylene oxides such as propylene oxide, styrene oxide, and 1,2-butylene, 2,3-butylene and isobutylene oxide, all as described in U.S. Patent Nos. 3,127,371, 3,214,387, 3,275,998, 3,275,199 and 3,399,149);
(g) the monomers described in Gross, et al., U.S. Patent No. 3,926,891: alkyl acrylates and methacrylates such as methyl acrylate, ethyl acrylate, propyl acrylate, hexyl acrylate, butyl methacrylate, hexyl methacrylate, octyl methacrylate, decyl methacrylate and omega hydroxy alkyl acrylates such as 2-hydroxyethyl acrylate, hydroxymethyl acrylate, 3-hydroxypropyl acrylate and 4-hydroxybutyl acrylate;
(h) ethylene, 1,3-dienes, styrene, halogenated olefins, vinyl esters, acrylates, methacrylates, acrylonitrile, methacrylonitrile, acrylamide, methacrylamide, N-vinyl carbazole, N-vinyl pyrrolidone, propylene, and
(i) alkenes, vinyl acetate.

It will be understood that the references to a monomer throughout this specification and claims also contemplate the co-polymerization of monomers such as maleic acid and styrene to form commercially useful co-polymers, graft polymers, block polymers. As is the case for the selection of a particular combination of monomer, crosslinker and initiator for polymerization and cross-linking, the selection of such combinations of monomers is well known and forms no part of the invention hereof such that further description of such co-polymerizations is unnecessary.

In the same manner that the present invention is not restricted with respect to the particular monomer or monomers utilized, a large number of crosslinkers are utilized to advantage. Such crosslinkers include any organic compound capable of reacting with an organic polymer in aqueous solution and include, generally, compounds having at least two polymerizable double bonds, compounds having at least one polymerizable double bond and at least one functional group reactive with an acid-containing monomer or polymer, compounds having at least two functional groups reactive with an acid-containing monomer or polymer, and polyvalent metal compounds which are capable of forming ionic cross-linkages. A non-limiting listing of a number of such crosslinkers includes:
- polyvinyls;
- polyesters of unsaturated mono- or polycarboxylic acids with polyols;
- bisacrylamides;
- carbamyl esters obtained by reacting polyisocyanates with hydroxyl-group containing monomers;
- di-, tri-, or tetraesters of acrylic or methacrylic acid;
- polyallyl esters of polycarboxylic acids;
- esters of unsaturated mono- or polycarboxylic acids with mono-allyl esters of polyols;
- di- or triallylamine, N,N'-diallylacrylamide, diallylmethacrylamide;
- N-methylol acrylamide, N-methyloylmethacrylamide;
- glycidyl acrylate and methacrylate, polyethylene glycol diacrylate, polyethylene glycol dimethacrylate;
- substituted hexadienes such as 2,5-dimethyl-3, 4-dihydroxy-1, 5-hexadiene and 2,5-dimethyl-2,4-hexadiene;
- olefinically unsaturated mono- or polycarboxylic acids such as acrylic, methacrylic, crotonic, isocrotonic, angelic, tiglic, senecioic, maleic, fumaric, itaconic, aconitic, teraconic, citraconic, mesaconic, and glutaconic acid;
- glyoxal;
- polyols;
- polyamines;
- polyepoxides and haloepoxyalkanes;
- polyglycidyl ethers and polyol polyglycidyl ethers such as ethylene, diethylene, and propylene glycol diglycidyl ether, glycerin triglycidyl ether, glycerin diglycidyl ether and polyethylene glycol diglycidyl ether, tartaric acid diacrylate and trimethacrylate, triethylene glycol diacrylate and dimethacrylate, ethylene glycol dimethacrylate and propylene glycol diacrylate;
- oxides;
- hydroxides;
- weak acid salts of alkaline earth metals and zinc, strontium and barium; and
- polyvalent metal salts of acrylic acid and methacrylic acid.

Likewise, it is not intended that the present invention be restricted with respect to the initiator utilized. Radicals can be produced by a variety of thermal, photochemical, and redox (oxidative-reduction) methods. Appropriate polymerization initiators well known in the art include:
- peroxygen compounds (sodium, potassium and ammonium persulfate), hydrogen peroxide, caprylyl and benzol peroxide, cumene hydroperoxides, acetyl peroxide, tert-butyl diterphthlate, tertbutylperbenzoate, sodium peracetate, tertbutylhydroperoxide, sodium percarbonate, and conventional redox initiator systems such as are formed by combining a peroxygen compound with a reducing agent such as sodium or ammonium sulfite or bisulfite, L-ascorbic acid, or ferrous salts;
- peroxides in combination with a reducing agent;
- tetraphenylsuccinodinitrile, tetra-p-methoxyphenylsuccinodinitrile; and
- azo initiators such as azobisisobutyronitrile (AIBN), 4-t-butylazo-4'-cyano-4,4'-azobis (4-cyanovaleric acid), 2,2'-azobis (2-amidino-propane)-hydrochloric acid salt.
It is also common to use mixtures of one or more of such initiators.

The present invention can be better understood by reference to the following, non-limiting examples of cross-linked, water-absorbing polymers produced in accordance with the method described above.

### Example 1

Aqueous solutions of the initiators sodium persulfate and 2,2'-azobis (2-amidinopropane HC1 (ABAH) (Polysciences, Inc., Warrington, PA) and ascorbic acid were prepared in the following proportions (all parts by weight):

| | initiator | water |
|---|---|---|
| sodium persulfate | 0.650 | 12.346 |
| ABAH | 0.975 | 12.021 |
| ascorbic acid | 0.013 | 12.983 |

Other reagents were used in the following proportions:

| | |
|---|---|
| water | 29.70% |
| acrylic acid (Catalog No. 14723-0, Aldrich Chemical Co., Milwaukee, WI) | 42.61% |
| triallylamine (Catalog No. T4500-4, Aldrich Chemical Co., Milwaukee, WI) | 0.30% |
| caustic soda | 22.12% |
| ascorbic acid solution | 1.05% |
| ABAH solution | 2.11% |
| sodium persulfate solution | 2.11% |

The water and acrylic acid were mixed while holding the temperature at 10°C and the triallylamine added. Caustic soda was added at a rate slow enough to hold the temperature under 40°C, then temperature was brought down to 7°C and held at that temperature as the ascorbic acid and ABAH solutions were added. The resulting aqueous mixture was purged with nitrogen for 4 to 5 minutes and the sodium persulfate added. That mixture was mixed for 30 seconds at a temperature under 37.8°C. The mixture was then sprayed into a reaction chamber constructed in accordance with the teachings of the present document that was about 4.57 meters high with an atmospheric pressure therein of about 33,860 N/m² below ambient and which had been heated to about 107.2°C. The resulting water-absorbing spherical particles were smooth surfaced, ranged between about 50 to about 100 microns in diameter, and had a water content of about 2%.

### Example 2

The method described in Example 1 was modified by using the following proportions of reagents:

| | |
|---|---|
| water | 26.00% |
| acrylic acid (see Example 1) | 44.85% |
| triallylamine (see Example 1) | 0.31% |
| caustic soda | 23.29% |
| ascorbic acid solution | 1.11% |
| ABAH solution | 2.22% |
| sodium persulfate solution | 2.22% |

All process parameters were the same as in Example 1 except that the temperature of the reaction chamber 12 was 65.6°C and the pressure of the atmosphere in the reaction chamber 12 was not reduced below ambient pressure. Although the resulting spherical particles were smooth surfaced and capable of efficient water absorption, water content was about 8%. When repeated using potassium hydroxide in place of caustic soda, yield dropped by about 50%.

### Example 3

The method described in Example 1 was modified by omission of the initiator ascorbic acid. The resulting smooth-surfaced spherical particles were obtained in approximately the same yield and size as obtained in Example 1, but water content was about 4%.

The polymerization process of the present invention produces a dry powder-like particle, eliminating the need for drying, grinding, pulverizing and/or other methods to produce suitable for immediate use in the range of from about 2 to 125,000 microns in size. Moreover, this invention utilizes liquid monomer sources to produce a substantially dry polymer particle which does not rely upon a substrate on which to initiate formation.

The process and apparatus described herein may also be used in the preparation of several novel polymer products. Foremost, it has been found that by altering the operational parameters of the apparatus, not only is the size and density of the product varied, but the shape and physical properties of the products are varied as well. More particularly, when the apparatus is operated at lower pressures and higher temperatures, the water or other solvent in the mixture droplets is violently released during polymerization. The result is a substantially dry polymer product which has a puffed out irregular shape not unlike cooked popcorn. The novelty of this product is believed to be in its irregular puffed shape, its low density, and in the case of the water absorbing polymers, an enhanced ability to absorb water or urine due to an increase in the polymer's surface area. Further, a product with these characteristics is obtained without spray drying or additional processing as is required in the known processes for obtaining similar products.

Similar known products do not have the same degree of irregularity in their shape as they are most commonly formed through the mechanical processes of pulverizing and chopping a mass of polymer material. Thus, known irregularly shaped polymers have less surface area and commonly have higher densities. Known methods for obtaining irregularly shaped polymer products are described in U.S. Patent No. Re. 32,649 entitled "Hydrogel-Forming Polymer Compositions For Use in Absorbent Structures", reissued to Brandt et al. on April 19, 1988 and U.S. Patent No. 4,625,001 entitled "Method for Continuous Production Of Cross-Lined Polymer" issued to Tsubakimoto et al, on November 25, 1986. These Patents are incorporated herein by reference.

The term "controlled atmosphere" as used herein described the internal condition of the apparatus and the reaction conditions of the polymerization process. As such, "controlled atmosphere" refers to an atmosphere that is substantially static. Any currents or movement of gases within the apparatus or in the vicinity of where the polymerization process is being carried out should be minimised; there should be no current or turbulence present to interfere with the free fall of the polymerizing droplets. While the droplets are generally described as falling through the apparatus, they are more accurately described as experiencing a free fall, which is preferably influenced only by the force of gravity.

Those skilled in the art who have the benefit of this disclosure will recognise that the above examples are set out by way of exemplification and for the purpose of complying with the requirements of the Patent Statute, and that those examples are not intended to limit the scope of the present invention. Likewise, with respect to the apparatus 10, it will be recognised that changes can be made to the individual structural elements comprising that apparatus without changing the manner in which those elements function to achieve the intended result thereof.

## Claims

1. A polymerization process for producing water absorbent polymer particles said process including the steps of:
(a) preparing a first mixture of at least one monomer and a solvent selected from the group consisting of water, organic solvents and mixtures thereof;
(b) adding an initiator to the first mixture to form a second mixture;
(c) spraying the second mixture into a heated, substantially static atmosphere having a pressure reduced below ambient pressure within a reaction chamber, said spraying resulting in the formation of droplets of said second mixture; and
(d) allowing said droplets of the sprayed second mixture to fall through the heated, substantially static atmosphere for a period of time sufficient to obtain dry water absorbent polymer particles with a desired degree of polymerization.

2. The polymerization process as set forth in Claim 1, wherein said second mixture is sprayed into the said atmosphere through one or more nozzles and wherein the size of the polymer particles produced is selected by increasing or decreasing the size of the nozzle opening.

3. The polymerization process as set forth in any one of Claims 1 to 2, wherein said solvent is continuously evacuated from the atmosphere during the polymerization process.

4. The polymerization process as set forth in any one of Claims 1 to 3, wherein said atmosphere is at a temperature of from about 23.8°C to about 148.8°C.

5. The polymerization process as set forth in any one of the preceding Claims, wherein said heated, substantially static atmosphere is maintained at a pressure of from about 388.6 to about 50,790 N/m² below ambient pressure.

6. The polymerization process as set forth in any one of Claims 1 to 5, wherein said second mixture is sprayed into the heated, substantially static atmosphere at a pressure of between 517 KPa and about 13.7 MPa.

7. The polymerization process as set forth in any one of Claims 1 to 6, wherein said first mixture is cooled prior to adding the initiator source.

8. The polymerization process as set forth in any one of Claims 1 to 7, which further comprises adding a crosslinker source to the first mixture.

9. The polymerization process as set forth in any one of Claims 1 to 8 wherein the second mixture is maintained at a temperature between about 26.6 degrees C and about 93.3 degrees C.

10. The polymerization process as set forth in one of Claims 1 to 9, wherein the monomer is a water-soluble, unsaturated monomer.

11. The polymerization process as set forth in any one of Claims 1 to 10, wherein the monomer is selected from the group consisting of functionalized olefins.

12. The polymerization process as set forth in any one of Claims 1 to 11, wherein said monomer is selected from the group consisting of styrenes, propylenes, vinyls, acrylates, methacrylates, acrylonitrile, methacrylonitrile, acrylamide and methacrylamide.

13. The polymerization process as set forth in any one of Claims 1 to 12, wherein the monomer is acrylic acid.

14. A polymerization process according to Claim 13 for producing an acrylic acid containing polymer wherein the first mixture is an aqueous mixture of partially neutralized acrylic acid, the polymer particles being particles of a partially neutralized acrylic acid containing polymer in particle powder form.

15. The polymerization process as set forth in any one of Claims 1 to 14, wherein the dry polymer particles produced comprise an irregularly puffed shaped polymer having relatively low density.

16. A polymerization apparatus comprising;
a reaction chamber (12);
means (14) for heating said reaction chamber;
means (16) for providing a reduced pressure within said reaction chamber;
one or more nozzles (18) connected to a feed line (20) for receiving a mixture of a monomer and an initiator;
means for spraying the mixture into the top section of the reaction chamber such that said spraying results in the formation of droplets of said mixture which experience free fall through the reaction chamber for a sufficient period of time to obtain a desired degree of polymerization, and
a means (26) for removing the polymer from the bottom of said reaction chamber while maintaining the heat and the reduced pressure within the chamber.

## Patentansprüche

1. Ein Polymerisationsverfahren zur Gewinnung wasser-aufnehmender Polymerpartikel, wobei dieses Verfahren aus den folgenden Schritten besteht:
(a) Vorbereitung einer ersten Mischung aus mindestens einem Monomer und aus einem Lösungsmittel, welches aus der Gruppe bestehend aus Wasser, organischen Lösungsmitteln und Mischungen davon gewählt wurde;
(b) Hinzufügen eines Initiators in die erste Mischung zur Bildung einer zweiten Mischung;
(c) Einspritzen der zweiten Mischung in eine erwärmte und in hohem Maße statische Atmosphäre bei einem unter den Umgebungsdruck verminderten Druck in einer Reaktionskammer, wobei dieses Einspritzen Tröpfchen der vorerwähnten zweiten Mischung bildet; und
(d) diese Tröpfchen der eingespritzten zweiten Mischung fallen durch die erwärmte und in hohem Maße statische Atmosphäre für eine genügend lange Zeitpeiode zur Bildung trockener wasser-aufnehmender Polymerpartikel mit dem gewünschten Polymerisationsgrad.

2. Das im Anspruch 1 bekanntgemachte Polymerisationsverfahren, in welchem die vorerwähnte zweite Mischung durch eine oder mehrere Düsen in diese Atmosphäre gespritzt wird, wobei jede Düse eine einstellbare Öffnung aufweist und die Größe der hergestellten Polymerpartikel durch ein Vergrößern oder Vermindern der Düsenöffnung bestimmt wird.

3. Das in den Ansprüchen 1 und 2 bekanntgemachte Polymerisationsverfahren, in welchem dieses Lösungsmittel kontinuierlich während des Polymerisationsverfahrens aus der Atmosphäre evakuiert wird.

4. Das in den Ansprüchen 1 bis 3 bekanntgemachte Polymerisationsverfahren, in welchem diese Atmosphäre eine Temperatur zwischen ca. 23,8 °C und ca. 148,8 °C aufweist.

5. Das in irgendeinem der vorerwähnten Ansprüche bekanntgemachte Polymerisationsverfahren, in welchem diese erwärmte und in hohem Maße statische Atmosphäre bei einem Druck zwischen ca. 388,6 und ca. 50.790 N/m² unterhalb des Umgebungsdruckes gehalten wird.

6. Das in irgendeinem der Ansprüche 1 bis 5 bekanntgemachte Polymerisationsverfahren, in welchem diese zweite Mischung bei einem Druck zwischen 517 KPa und ca. 13,7 MPa in die erwärmte und in hohem Maße statische Atmosphäre gespritzt wird.

7. Das in irgendeinem der Ansprüche 1 bis 6 bekanntgemachte Polymerisationsverfahren, in welchem die vorerwähnte erste Mischung vor dem Hinzufügen der Initiatorquelle gekühlt wird.

8. Das in irgendeinem der Ansprüche 1 bis 7 bekanntgemachte Polymerisationsverfahren, das außerdem das Hinzufügen eines Vernetzungsmittels zur ersten Mischung beinhaltet.

9. Das in irgendeinem der Ansprüche 1 bis 8 bekanntgemachte Polymerisationsverfahren, in welchem die Temperatur der zweiten Mischung zwischen ca. 26,6 Grad-Celsius und ca. 93,3 Grad-Celsius aufrechterhalten wird.

10. Das in irgendeinem der Ansprüche 1 bis 9 bekanntgemachte Polymerisationsverfahren, in welchem das Monomer ein wasser-aufnehmendes ungesättigtes Monomer ist.

11. Das in irgendeinem der Ansprüche 1 bis 10 bekanntgemachte Polymerisationsverfahren, in welchem das Monomer aus einer Gruppe gewählt wird, die aus funktionstüchtig oder aus nicht-funktionstüchtig gemachten Olefins besteht.

12. Das in irgendeinem der Ansprüche 1 bis 11 bekanntgemachte Polymerisationsverfahren, in welchem das Monomer aus einer Gruppe gewählt wird, die aus Ethylenen, Dienen, Styrolen, Propylenen, Vinylen, Acrylaten, Methacrylaten, Acrylonitrilen, Methacrylonitrilen, Acrylamiden, Methacrylamiden und Alkenen besteht.

13. Das in irgendeinem der Ansprüche 1 bis 12 bekanntgemachte Polymerisationsverfahren, in welchem das Monomer eine Acrylsäure darstellt.

14. Ein Polymerisationsverfahren nach Anspruch 13 zur Gewinnung eines acrylsäureenthaltenden Polymers, in welchem die erste Mischung eine wässerige Mischung aus einer teilweise neutralisierten Acrylsäure ist, wobei die Polymerpartikel Partikel einer teilweise neutralisierten Acrylsäure darstellen, die das Polymer in einer Partikelpulverform enthält.

15. Das in irgendeinem der Ansprüche 1 bis 14 bekanntgemachte Polymerisationsverfahren, in welchem die gewonnenen trockenen Polymerpartikel ein Polymer einer irregulär geschwellten Form mit einer verhältnismäßig niedrigen Dichte aufweisen.

16. Ein aus den folgenden Komponenten bestehendes Polymerisationsgerät:
Eine Reaktionskammer (12);
Vorrichtungen (14) zum Erwärmen dieser Reaktionskammer;
Vorrichtungen (16) zur Sicherstellung eines verminderten Druckes in dieser Reaktionskammer;
Eine oder mehrere Düsen (18) - mit der Zufuhrleitung (20) verbunden - zum Empfang einer Mischung von Monomer und Initiator;
Vorrichtungen zum Einspritzen der Mischung in den oberen Reaktionskammerteil auf eine solche Weise, daß diese Einspritzphase zur Bildung von Tröpfchen dieser Mischung führt, welche dann frei und für eine Zeitperiode einer genügenden Länge durch die Reaktionskammer zum Erreichen des gewünschten Polymerisationsgrades fallen; und
Vorrichtung (26) zur Polymerentfernung vom Boden dieser Reaktionskammer, wobei die Wärme und der verminderte Druck in der Kammer aufrecht erhalten werden.

## Revendications

1. Un procédé de polymérisation pour la production de particules polymères hydrophiles. Ledit procédé comprenant les étapes suivantes:
(a) préparation d'un premier mélange d'au moins un monomère et d'un solvant choisi parmi le groupe consistant d'eau, de solvants organiques et de leurs mélanges;
(b) l'addition d'un initiateur dans le premier mélange pour former un deuxième mélange;
(c) pulvérisation par jet du deuxième mélange dans une atmosphère chauffée et substantiellement statique au sein d'une chambre de réaction possédant une pression réduite en comparaison à la pression ambiante, ladite pulvérisation conduisant à la formation de gouttelettes du ledit deuxième mélange; et
(d) permettant lesdites gouttelettes du deuxième mélange pulvérisé de tomber à travers l'atmosphère chauffée et substantiellement statique pendant une durée de temps suffisante pour l'obtention de particules polymères hydrophiles sèches d'un degré de polymérisation désiré.

2. Procédé de polymérisation selon la Revendication 1, dans lequel ledit deuxième mélange est pulvérisé dans ladite atmosphère par le biais d'un ou de plusieurs gicleurs muni chacun d'un orifice réglable et dans lequel la taille des particules polymères produites est choisie par l'augmentation ou la réduction de l'orifice du gicleur.

3. Procédé de polymérisation selon l'une des Revendications 1 ou 2, dans lequel ledit solvant est évacué d'une manière continue de ladite atmosphère pendant le processus de polymérisation.

4. Procédé de polymérisation selon l'une quelconque des Revendications 1 à 3, dans lequel ladite atmosphère est à une température entre environ 23.3°C et environ 148.8°C.

5. Procédé de polymérisation selon l'une quelconque des Revendications précédentes, dans lequel ladite atmosphère chauffée et substantiellement statique est maintenue à une pression entre environ 388.6 et environ 50790 N/m² en dessous de la pression ambiante.

6. Procédé de polymérisation selon l'une quelconque des Revendications 1 à 5, dans lequel ledit deuxième mélange est pulvérisé dans ladite atmosphère chauffée et substantiellement statique à une pression entre environ 517 Kpa et environ 13.7Mpa.

7. Procédé de polymérisation selon l'une quelconque des Revendications 1 à 6, dans lequel ledit premier mélange est refroidi avant l'addition de la source initiatrice.

8. Procédé de polymérisation selon l'une quelconque des Revendications 1 à 7, qui comprend en plus l'addition d'une source réticulatrice dans le premier mélange.

9. Procédé de polymérisation selon l'une quelconque des Revendications 1 à 8, dans lequel le deuxième mélange est maintenu à une température entre environ 26.6°C et environ 93.3°C.

10. Procédé de polymérisation selon l'une quelconque des Revendications 1 à 9, dans lequel le monomère est un monomère non-saturé soluble à l'eau.

11. Procédé de polymérisation selon l'une quelconque des Revendications 1 à 10, dans lequel ledit monomère est choisi parmi le groupe comportant d'oléfines fonctionnalisées et non-fonctionnalisées.

12. Procédé de polymérisation selon l'une quelconque des Revendications 1 à 11, dans lequel ledit monomère est choisi parmi le groupe comportant des éthylènes, des diènes, des propylènes, des vinyles, des acrylates, des méthacrylates, de l'acrylonitrile, du méthacrylonitrile, de l'acrylamide, du méthacrylamide et des alkènes.

13. Procédé de polymérisation selon l'une quelconque des Revendications 1 à 12, dans lequel ledit monomère est l'acide acrylique.

14. Procédé de polymérisation selon la Revendication 13, pour la production d'un acide acrylique avec teneur en polymère, dans lequel le premier mélange est un mélange aqueux d'acide acrylique partiellement neutralisé, les particules polymères étant des particules d'un acide acrylique partiellement neutralisé avec teneur de polymère en forme de particules en poudre.

15. Procédé de polymérisation selon l'une quelconque des Revendications 1 à 14, dans lequel les particules polymères sèches produites comprennent un polymère gonflé de forme irrégulière à densité relativement peu élevée.

16. Un appareil de polymérisation comprenant:
Une chambre de réaction (12);
Moyens (14) pour chauffer ladite chambre de réaction;
Moyens (16) pour procurer une pression réduite au sein de ladite chambre de réaction;
Un ou plusieurs gicleurs (18) relié à une conduite (20) d'alimentation pour recevoir le mélange d'un monomère et d'un initiateur;
Moyens pour pulvériser le mélange dans la section supérieure de la chambre de réaction d'une telle manière que ladite pulvérisation puisse conduire à la formation de gouttelettes du ledit mélange, qui à leur tour tomberont en chute libre à travers la chambre de réaction en une durée de temps suffisante pour l'obtention du degré désiré de polymérisation, et
Moyens(26) pour évacuer le polymère du fond de ladite chambre de réaction tout en maintenant la chaleur et la pression réduite au sein de la chambre.
